(19) **Europäisches Patentamt**
European Patent Office
Office européen des brevets

(11) **EP 1 843 906 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: **06703885.1**

(22) Anmeldetag: **27.01.2006**

(51) Int Cl.:
**B60G 17/015** *(2006.01)*   **B60G 21/055** *(2006.01)*

(86) Internationale Anmeldenummer:
**PCT/EP2006/000704**

(87) Internationale Veröffentlichungsnummer:
**WO 2006/081984 (10.08.2006 Gazette 2006/32)**

(54) **FAHRDYNAMIK-STEUERUNGS- ODER REGELSYSTEM FÜR EIN ZWEISPURIGES ZWEIACHSIGES KRAFTFAHRZEUG**

DRIVING DYNAMICS CONTROL OR REGULATING SYSTEM FOR A TWO TRACK, TWO AXLE MOTOR VEHICLE

SYSTEME DE COMMANDE OU DE REGLAGE DE DYNAMIQUE DE CONDUITE POUR VEHICULE AUTOMOBILE A DEUX VOIES ET DEUX ESSIEUX

(84) Benannte Vertragsstaaten:
**DE FR GB**

(30) Priorität: **01.02.2005 DE 102005004601**

(43) Veröffentlichungstag der Anmeldung:
**17.10.2007 Patentblatt 2007/42**

(73) Patentinhaber: **Bayerische Motoren Werke Aktiengesellschaft
80809 München (DE)**

(72) Erfinder:
• **HOFMANN, Martin
80639 München (DE)**
• **WEBERS, Klaus Dr.
80935 München (DE)**

(56) Entgegenhaltungen:
**EP-A- 0 827 852**    **US-A- 5 186 487**
**US-A1- 2004 176 890**    **US-B1- 6 471 218**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Fahrdynamik-Steuerungs- oder Regelsystem für ein zweispuriges zweiachsiges Kraftfahrzeug mit nur einer angetriebenen Achse, das zur Wankmomentabstützung ein System zur Veränderung der Aufteilung der Radaufstandskräfte auf das linke bzw. rechte Rad jeder Achse aufweist, wobei die von der Vorderachse und der Hinterachse übernommenen Anteile der Wankmomentabstützung in Abhängigkeit von dem vom Antriebsaggregat des Kraftfahrzeugs abgegebenen Antriebsmoment oder einer hiermit in einem festen Zusammenhang stehenden Größe im Sinne einer Vorsteuerung veränderbar sind. Zum bekannten Stand der Technik wird neben der DE 697 13 694 T2 insbesondere auf die US 2004/0176890 verwiesen.

Aus diesen Schriften ist es bekannt, dass durch Erzeugung eines sog. Wank-Kontermomentes im Fahrwerk eines Kraftfahrzeugs dieses bei Kurvenfahrt stabilisiert werden kann. Nach der erstgenannten Schrift wird unter Berücksichtigung der aktuellen Fahrzeuggeschwindigkeit, des Lenkeinschlagwinkels und der Differenz zwischen einem hieraus abgeleiteten Sollwert für die Gierrate und dem Gierraten-Istwert der Anteil des am Quer-Stabilisator der Fahrzeug-Hinterachse angelegten Wank-Kontermoments gegenüber demjenigen an der Vorderachse erhöht, wenn der Gier-Istwert kleiner als der Gier-Sollwert ist, woraufhin sich ein weniger untersteuerndes Fahrverhalten einstellt. Ist hingegen der Gierraten-Istwert größer als der Gierraten-Sollwert, so liegt ein tendenziell übersteuerndes Fahrverhalten vor, dem dadurch entgegengewirkt wird, dass der Anteil des am Quer-Stabilisator der Fahrzeug-Hinterachse angelegten Wank-Kontermoments verringert und der Wank-Kontermomentanteil an der Fzg.-Vorderachse entsprechend erhöht wird. Dieses bekannte System ist also mit einem Gierratenregler versehen.

Die vorliegende Erfindung bezieht sich jedoch auf ein Fahrdynamik-Steuerungs- oder Regelsystem der im Oberbegriff des Anspruchs 1 angegebenen allgemeinen Art, d.h. ein System nach der vorliegenden Erfindung muss keinen Gierratenregler enthalten. Vielmehr soll eine unterschiedliche Aufteilung der Wankmomentabstützung zwischen der Vorderachse und der Hinterachse des Fahrzeugs in Abhängigkeit einer anderen Randbedingungen erfolgen, nämlich in Abhängigkeit vom vom Antriebsaggregat des Kraftfahrzeugs abgegebenen Antriebsmoment oder einer hiermit in einem festen Zusammenhang stehenden Größe, was grundsätzlich aus der eingangs zweitgenannten Schrift bekannt ist. Diesem Aspekt liegt die folgende Problematik zugrunde:

Mit den heute zumeist verbauten offenen Differentialen wird die Antriebskraft zu jeweils 50% auf die beiden Räder der angetriebenen Fahrzeug-Achse verteilt. Dabei wird im weiteren von einer angetriebenen Hinterachse ausgegangen, ohne jedoch die vorliegende Erfindung hierauf zu beschränken. Nun kann bei zu großer Querbeschleunigung des Fahrzeugs die Aufstandskraft am kurveninneren Hinterrad nicht mehr ausreichen, um das vom Fzg.-Antriebsaggregat bereitgestellte Antriebsmoment in Längskraft umzusetzen. Als Folge kann das Rad sozusagen "abreißen", d.h. die Traktion wird schlechter und es droht Leistungsübersteuern. Im bislang üblichen Stand der Technik wird ein solches "Abreißen" des Rades durch einen gezielten Bremseingriff vermieden, was jedoch nachteilig ist, da hierdurch praktisch unnötigerweise Antriebsenergie vernichtet und der Verschleiß des Fahrzeug-Bremssystems erhöht wird. Schließlich sind solche Bremseingriffe für den Fahrer spürbar und gehen folglich zu Lasten des Komforts. Dies kann vermieden werden, wenn die Momentenverteilung einer Wankmomentabstützung, die vorzugsweise über geteilte Querstabilisatoren, deren Hälften mittels eines Aktuators zumindest geringfügig gegeneinander tordierbar sind, erfolgt, in Abhängigkeit vom aktuellen Antriebsmoment, das über die angetriebenen Räder auf die Fahrbahn übertragen werden soll, geeignet vorgenommen wird. Diese geeignete Aufteilung der Wankmomentabstützung zwischen der Fzg.-Vorderachse und der Fzg.-Hinterachse, d.h. bspw. zwischen dem Vorderachs-Stabilisator und dem Hinterachs-Stabilisator, kann vorzugsweise in Form einer Vorsteuerung (und somit zunächst ohne Regelungsvorgang) durchgeführt werden. Ein Beispiel einer solchen Vorsteuerung wird an späterer Stelle noch näher erläutert.

Es kann jedoch mit einer solchen Vorsteuerung insbesondere bei geringeren Reibwerten zwischen den Rädern und einer beispielsweise nassen Fahrbahn weiterhin ein bereits genanntes "Abreißen" eines angetriebenen Rades erfolgen, weshalb hiermit eine Maßnahme aufgezeigt werden soll, mit Hilfe derer ein solches Abreißen vermieden werden kann (= Aufgabe der Erfindung).

Die Lösung dieser Aufgabe ist dadurch gekennzeichnet, dass dieser Vorsteuerung eine Schlupfregelung überlagert ist, welche die Abweichung zwischen der festgestellten Drehzahldifferenz der angetriebenen Räder und der dem jeweiligen Fahrzustand entsprechenden Drehzahldifferenz zu minimieren versucht.

Für Fälle, in denen die genannte Vorsteuerung nicht ausreicht, ist somit im Hinblick auf eine geeignete Anpassung des sog. Momentenfaktors der soweit beschriebenen Vorsteuerung eine Schlupfregelung überlagert, die im folgenden beschrieben wird.

Zwar kann eine hiermit vorgeschlagene Schlupfregelung aus physikalischen Gründen nicht den absoluten Schlupf der angetriebenen (Hinter-)Räder regeln, da hiermit kein Eingriff in die Momentenabgabe des Fzg.-Antriebsaggregats möglich ist, d.h. bei zu großem Antriebsmoment kann ein Abreißen der beiden angetriebenen Räder nicht vermieden werden. Jedoch kann ein hiermit vorgeschlagener Schlupfregler die Differenzdrehzahl der beiden Antriebsräder (Hinterräder) regeln und arbeitet demzufolge nach diesem Prinzip, nämlich dass die Abweichung zwischen der festgestellten Drehzahldifferenz der angetriebenen Räder und der dem jeweiligen Fahrzustand entsprechenden Drehzahldifferenz minimiert werden soll. Die sog. Soll-Drehzahldifferenz, d.h. die dem jeweiligen Fahrzustand entsprechende Drehzahldifferenz der angetriebenen Räder ergibt sich dabei bekanntlich aus der Gierrate und der Spurweite des Fahrzeugs, während die Ist-Drehzahldifferenz einfach messbar ist. Nach entsprechender Normierung kann die hieraus feststellbare Regeldifferenz vorzugsweise über einen PI-Regler einer elektronischen Steuereinheit, die die besagte Aufteilung der Wankmomentabstützung vornimmt, zugeführt werden.

Die soweit beschriebenen Funktionen "Vorsteuerung" und "Schlupfregler" wirken solchermaßen, dass bei einem heckgetriebenen Fahrzeug bei einem durchdrehendem kurveninneren Rad der Momentenfaktor croll vergrößert wird, d.h. es wird ein größerer Momentenanteil an der Vorderachse abgestützt. Dadurch wird nicht nur die Traktion am kurveninneren Hinterrad erhöht, sondern es wird auch ein eher untersteuerndes Eigenlenkverhalten erreicht, was zusätzlich einem Leistungsübersteuern entgegenwirkt

Im weiteren nochmals auf die genannte Vorsteuerung eingehend wird im bereits genannten Beispielsfall die Torsionssteifigkeit der beiden Querstabilisatoren durch deren jeweiligen Aktuator in gewünschter Weise eingestellt, wobei ausdrücklich darauf hingewiesen sei, dass anstelle des zu übertragenden Antriebsmoments auch eine andere physikalische Größe herangezogen werden kann, die mit dem zu übertragenden Antriebsmoment vergleichbar ist, d.h. in einem festen Zusammenhang steht.

Bekanntlich wird die Verteilung der Aufstandskräfte eines Fahrzeuges im wesentlichen bestimmt durch dessen Längsbeschleunigung und Querbeschleunigung sowie durch den sog. Momentenfaktor (= croll). Wird eine bestimmte Aufstandskraft an einem Rad benötigt, so kann über ein inverses statisches Fahrzeugmodell der dafür benötigte Momentenfaktor croll-soll wie folgt berechnet werden:

$$\text{croll\_soll} = 0.5 * (-2 * Fz * ll * spurw + lv * mass * g * spurw - 2 * mass * ay * cgh * ll + mass * ax * cgh * spurw) / mass / ay / cgh / ll ;$$

mit Fz = Soll-Radaufstandskraft, ll = Radstand, spurw = Spurweite,
lv = Abstand des Fzg.-Schwerpunkts von der Vorderachse,
mass = Fzg.-Masse, g = Gravitationskonstante, ay = Querbeschleunigung, cgh = Schwerpunktshöhe, ax = Längsbeschleunigung,
wobei "*" für eine Multiplikation, "/" für eine Division und "+" für eine Addition sowie"-" für eine Subtraktion bzw. ein negatives Vorzeichen steht. Nimmt der Momentenfaktor croll den Wert "1" an, so erfolgt die Wankmomentabstützung alleinig an der Fzg.-Vorderachse und bei einem Wert croll = 0 alleinig an der Fzg.-Hinterachse.

Die Vorsteuerung für die genannten Aktuatoren oder dgl. d.h. für ein die Aufteilung der Wankmomentabstützung zwischen der Vorderachse und der Hinterachse des Fahrzeugs übernehmendes System erfolgt dann über das jeweilige Antriebsmoment, das dem vom Fahrer des Fahrzeugs angeforderten sog. Motormoment M_Mot gleichzusetzen ist. Die Umrechnung dieses Motormoments in die Soll-Aufstandskraft für ein angetriebenes Rad geschieht wie folgt:

$$Fz = M\_Mot * i\_Getriebe * i\_Differential * 0.5 * 1/(r\_Rad * mue) ;$$

mit getriebe bzw. i_Differential als Übersetzungsverhältnis des Getriebes bzw. Differentials und r_Rad als Rad-Halbmesser. Der Wert mue ist das Maximum des Kraftschlusskoeffizienten zwischen Reifen und Fahrbahn und entspricht dem Reibwert der Fahrbahn.

Mit einer derartigen Vorsteuerung kann die Aufteilung der Wankmomentabstützung zwischen der Vorderachse und der Hinterachse des Fahrzeugs somit jederzeit je nach vom Fahrer angeforderten Antriebsmoment derart erfolgen und somit die Aufstandskraft zwischen den Fahrzeug-Rädern solchermaßen verteilt werden, dass kein Rad "abreißt", d.h. jedes angetriebene Rad eine ausreichende Traktion erhält (selbstverständlich weiterhin begrenzt durch den jeweiligen Fahrbahn-Reibwert). Vorzugsweise erfolgt ein solcher Eingriff nur dann, wenn die Aufstandskraft an einem der beiden angetriebenen Räder zu gering werden würde. Im Normalfahrbetrieb hingegen erfolgt vorzugsweise somit kein derartiger Eingriff der Vorsteuerung, d.h. hier kann bspw. der sog. Momentenfaktor über eine von der Fahrgeschwindigkeit abhängige Kennlinie vorgeben werden, so wie dies weiter oben bereits kurz angesprochen wurde. Für die entsprechende Umsetzung kann in der Steuerungskette eine sog. Totzone bzw. ein entsprechendes Steuerungsglied vorgesehen sein.

Die genannte Vorsteuerung geht von einem bekannten Reibwert bzw. Kraftschlusskoeffizienten zwischen Reifen und Fahrbahn aus. Grundsätzlich ist eine Ermittlung des jeweils vorliegenden Reibwerts möglich; alternativ kann jedoch auch ein geschätzter Wert hierfür angesetzt werden. Wenn der tatsächliche Reibwert jedoch geringer ist als der in der soweit geschilderten Vorsteuerung zugrunde gelegte Wert, so führt dies dazu, dass eine zu geringe Soll-Aufstandskraft berechnet wird. In diesem Fall wird die erfindungsgemäß vorgeschlagene Schlupfregelung wirksam.

Hingegen würde ein Gierratenregler, wie er zum Beispiel in der eingangs erstgenannten Schrift für ein Fahrdynamik-Regelsystem mit veränderbarer Aufteilung der Wankmomentabstützung vorgeschlagen ist, prinzipiell die Traktion im Falle des Leistungsübersteuerns verbessern. Es zeigt sich jedoch, dass eine Drehzahldifferenz und damit Schlupf wesentlich früher als eine Gierdifferenz auftritt und damit ein Gierratenregler einen hiermit zusätzlich vorgeschlagenen Schlupfregler nicht ersetzen kann. Im Falle einer gegensinnigen Veränderung der Aufteilung der Wankmomentabstützung durch einen Gierratenregler einerseits und durch die hiermit beschriebene Schlupfregelung andererseits könnte es jedoch dazu kommen, dass sich diese beiden Systeme aufheben. Um dies zu vermeiden wird vorgeschlagen, einem ggf. zusätzlich vorgesehenen Gierratenregler auf geeignete Weise den Vorrang einzuräumen, bspw. durch entsprechende Verkleinerungsfaktoren und/oder Vorzeichenumkehr im Regelkreis des hier vorgeschlagenen Schlupfreglers.

Was ein System zur Veränderung der Aufteilung der Radaufstandskräfte betrifft, so kann dieses - wie bereits erwähnt wurde - zunächst sog. aktive Quer-Stabilisatoren aufweisen, d.h. an der Vorderachse und an der Hinterachse jeweils einen geteilten Stabilisator, dessen Stabilisatorhälften mittels eines geeigneten Aktuators gegeneinander verdrehbar sind. In einer besonders bevorzugten Ausführungsform können zusätzlich zu diesen auch noch den einzelnen Fahrzeug-Rädern zugeordnete hinsichtlich ihrer Charakteristik verstellbare Dämpfer vom Fahrdynamik-Regelsystem geeignet, d.h. im Sinne einer gewünschten Veränderung der Aufteilung der Radaufstandskräfte angesteuert werden. Es können aber auch den einzelnen Rädern zugeordnete aktive Federungssysteme, mit denen bekanntlich die Federkraft bzw. Federkennlinie veränderbar ist, von einem erfindungsgemäßen Fahrdynamik-Steuerungs- oder Regelsystem geeignet angesteuert werden, wobei noch darauf hingewiesen sei, dass durchaus eine Vielzahl von Details abweichend von obigen Erläuterungen gestaltet sein kann, ohne den Inhalt der Patentansprüche zu verlassen.

**Patentansprüche**

1. Fahrdynamik-Steuerungs- oder Regelsystem für ein zweispuriges zweiachsiges Kraftfahrzeug mit nur einer angetriebenen Achse, das zur Wankmomentabstützung ein System zur Veränderung der Aufteilung der Radaufstandskräfte auf das linke bzw. rechte Rad jeder Achse aufweist, wobei die von der Vorderachse und der Hinterachse übernommenen Anteile der Wankmomentabstützung in Abhängigkeit von dem vom Antriebsaggregat des Kraftfahrzeugs abgegebenen Antriebsmoment oder einer hiermit in einem festen Zusammenhang stehenden Größe im Sinne einer Vorsteuerung veränderbar sind,
   **dadurch gekennzeichnet, dass** dieser Vorsteuerung eine Schlupfregelung überlagert ist, welche die Abweichung zwischen der festgestellten Drehzahldifferenz der angetriebenen Räder und der dem jeweiligen Fahrzustand entsprechenden Drehzahldifferenz zu minimieren versucht.

2. Fahrdynamik-Steuerungs- oder Regelsystem nach Anspruch 1,
   **dadurch gekennzeichnet, dass** aus dem Antriebsmoment eine Soll-Radaufstandskraft für die angetriebenen Räder bestimmt und anhand dieser die Aufteilung der Wankmomentabstützung ermittelt wird.

3. Fahrdynamik-Steuerungs- oder Regelsystem nach Anspruch 2,
   **dadurch gekennzeichnet, dass** für die Bestimmung der Soll-Radaufstandskraft ein geschätzter oder gemessener Wert für den Reibwert zwischen den angetriebenen Rädern und der Fahrbahn verwendet wird.

4. Fahrdynamik-Steuerungs- oder Regelsystem nach einem der vorangegangenen Ansprüche,
   **dadurch gekennzeichnet, dass** nur dann eine Veränderung der Aufteilung der Wankmomentabstützung in Abhängigkeit vom Antriebsmoment des Antriebsaggregats vorgenommen wird, wenn die zur Verfügung stehende Aufstandskraft ansonsten für die Übertragung des Antriebsmoments auf die Fahrbahn nicht ausreichen würde.

5. Fahrdynamik-Steuerungs- oder Regelsystem nach einem der vorangegangenen Ansprüche, mit einem Gierratenregler, der ebenfalls eine Aufteilung der Wankmomentabstützung vornimmt,
   **dadurch gekennzeichnet, dass** im Falle einer gegensinnigen Veränderung der Aufteilung der Wankmomentabstützung durch den Gierratenregler einerseits und durch die Schlupfregelung andererseits dem Gierratenregler der Vorrang eingeräumt wird.

6. Fahrdynamik-Steuerungs- oder Regelsystem nach einem der vorangegangenen Ansprüche,
   **dadurch gekennzeichnet, dass** das Regelsystem zur Veränderung der Aufteilung der Radaufstandskräfte neben aktiven geteilten Stabilisatoren, deren Stabilisatorhälften gegeneinander verdrehbar sind, den einzelnen Fahrzeug-Rädern zugeordnete hinsichtlich ihrer Charakteristik verstellbare Dämpfer geeignet ansteuert.

7. Fahrdynamik-Steuerungs- oder Regelsystem nach einem der vorangegangenen Ansprüche, **dadurch gekennzeichnet, dass** das Regelsystem zur Veränderung der Aufteilung der Radaufstandskräfte den einzelnen Rädern zugeordnete aktive Federungssysteme geeignet ansteuert

**Claims**

1. A system for controlling or regulating driving dynamics of a two-track, two-axle motor vehicle having only one driven axle, which, to provide rolling moment support, has a system for changing the distribution of the wheel contact forces to the left-hand or right-hand wheel of each axle, wherein the fractions of the rolling moment support taken over by the front axle and the rear axle can be changed as a function of the drive torque provided by the drive unit of the motor vehicle or a variable in a fixed relationship with this, in the sense of a pilot control, **characterised in that** a slip control is superimposed on this pilot control, which slip control seeks to minimise the deviation between the established rotational speed difference of the driven wheels and the rotational speed difference corresponding to the respective driving state.

2. A system for controlling or regulating driving dynamics according to claim 1, **characterized in that** a desired wheel contact force for the driven wheels is determined from the drive torque and, using this, the distribution of the rolling moment support is determined.

3. A system for controlling or regulating driving dynamics according to claim 2, **characterised in that** an estimated or measured value for the coefficient of friction between the driven wheels and the road is used to determine the desired wheel contact force.

4. A system for controlling or regulating driving dynamics according to any one of the preceding claims, **characterised in that** a change in the distribution of the rolling moment support as a function of the drive torque of the drive unit is carried out only when the contact force available would otherwise not be sufficient to transmit the drive torque to the road.

5. A system for controlling or regulating driving dynamics according to any one of the preceding claims, with a yaw rate controller, which also carries out a distribution of the rolling moment support, **characterised in that** in the case of a change in the distribution of the rolling moment support in opposite directions by the yaw rate controller, on the one hand, and by the slip control, on the other hand, the yaw rate controller has priority.

6. A system for controlling or regulating driving dynamics according to any one of the preceding claims, **characterised in that** the regulating system for changing the distribution of the wheel contact forces, apart from active divided stabilisers, the stabiliser halves of which can be rotated against one another, suitably activates dampers which can be adjusted with respect to their characteristics and are associated with the individual wheels.

7. A system for controlling or regulating driving dynamics according to any one of the preceding claims, **characterised in that** the regulating system for changing the distribution of the wheel contact forces suitably activates active suspension systems associated with the individual wheels.

**Revendications**

1. Système de commande ou de régulation de la dynamique de conduite d'un véhicule automobile à deux voies et deux essieux dont seulement un essieu est moteur, ayant un système pour modifier la répartition des forces d'appui de roues pour la roue gauche et la roue droite de chaque essieu, pour appuyer le couple de roulis, selon lequel :

la partie de l'appui de couple de roulis assurée par l'essieu avant et l'essieu arrière est modifiée en fonction du couple moteur fourni par le groupe d'entraînement du véhicule ou d'une grandeur liée à ce couple selon une relation fixe, dans le sens d'une commande anticipée,

**caractérisé en ce que**
cette commande anticipée est combinée à une régulation de patinage qui cherche à réduire au minimum la différence de vitesse de rotation constatée entre les roues motrices et la différence de vitesse de rotation correspondant à l'état respectif du véhicule.

**2.** Système de régulation et de commande de la dynamique de conduite selon la revendication 1,
**caractérisé en ce qu'**
à partir du couple d'entraînement, on détermine une force d'appui de roue de consigne pour les roues motrices et à l'aide de la répartition, on détermine l'appui de couple de roulis.

**3.** Système de régulation et de commande de la dynamique de conduite selon la revendication 2,
**caractérisé en ce que**
pour déterminer la force d'appui de roue de consigne, on utilise un coefficient de friction évalué ou mesuré entre les roues motrices et la chaussée.

**4.** Système de régulation et de commande de la dynamique de conduite selon l'une des revendications précédentes,
**caractérisé en ce que**
la répartition de l'appui de couple de roulis n'est modifiée qu'en fonction du couple d'entraînement du groupe d'entraînement que si la force d'appui disponible serait par ailleurs insuffisante pour transmettre le couple d'entraînement à la chaussée.

**5.** Système de régulation et de commande de la dynamique de conduite selon l'une des revendications précédentes, comportant un régulateur de vitesse de lacet qui assure également une répartition de l'appui de couple de roulis,
**caractérisé en ce qu'**
en cas de modification en sens opposé de la répartition de l'appui de couple de roulis avec d'une part le régulateur de vitesse de lacet et d'autre part avec la régulation de patinage, le régulateur de lacet est prioritaire.

**6.** Système de régulation et de commande de la dynamique de conduite selon l'une des revendications précédentes,
**caractérisé en ce que**
le système de régulation pour modifier la répartition des forces d'appui des roues commande en plus des stabilisateurs actifs divisés dont les moitiés de stabilisateur peuvent être tournées l'une par rapport à l'autre, également des amortisseurs à caractéristique réglable associés aux différentes roues du véhicule.

**7.** Système de régulation et de commande de la dynamique de conduite selon l'une des revendications précédentes,
**caractérisé en ce que**
le système de régulation est commandé de manière appropriée pour modifier la répartition des forces d'appui des roues par des systèmes de suspension active associés aux différentes roues.

**EP 1 843 906 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69713694 T2
- US 20040176890 A